# FASCICULE DE BREVET EUROPEEN

(11) **EP 0 883 699 B1**
(45) Date de publication et mention de la délivrance du brevet: **30.05.2001**
(21) Numéro de dépôt: 97943039.4
(22) Date de dépôt: 01.10.1997
(51) Int. Cl.: C23C 18/54, C23C 18/16

(54) **PROCEDE ET DISPOSITIFS POUR LA FORMATION ELECTROLYTIQUE D'UN DEPOT SUR UN ENSEMBLE SELECTIONNE D'ELECTRODES**
VERFAHREN UND VORRICHTUNG ZUR ELEKTROLYTISCHEN FORMIERUNG VON SCHICHTEN AUF EINER ANORDNUNG SELEKTIERTER ELEKTRODEN
METHOD AND DEVICES FOR THE ELECTROLYTIC FORMATION OF A DEPOSIT ON AN ASSEMBLY OF SELECTED ELECTRODES

(30) Priorité: 03.10.1996 FR 9612060
(43) Date de publication de la demande: 16.12.1998
(73) Titulaire: COMMISSARIAT A L'ENERGIE ATOMIQUE, 75015 Paris (FR)
(72) Inventeur: CLERC, Jean-Frédéric, F-38120 Le Fontanil (FR)
(74) Mandataire: Dubois-Chabert, Guy
(86) Numéro de dépôt international: FR9701735
(87) Numéro de publication internationale: WO9814637

(56) Documents cités:
- EP-A- 0 256 680
- EP-A- 0 419 804
- DATABASE WPI Section Ch, Week 9546 Derwent Publications Ltd., London, GB; Class A35, AN 95-351665 XP002032356 & BR 9 305 384 A (BENATTI A) , 12 septembre 1995

## Description

### Domaine technique

La présente invention concerne un procédé et des dispositifs pour la formation électrolytique d'un dépôt sur un ensemble sélectionné d'électrodes d'un substrat.

L'invention trouve des applications notamment pour la fabrication de capteurs ou d'autres éléments sensibles miniaturisés dans lesquels des puces avec un grand nombre d'électrodes doivent être réalisées. Ces électrodes, pour être adaptées à leur fonction spécifique dans le capteur ou l'élément sensible, doivent être sélectivement recouvertes de matériaux appropriés.

A titre d'exemple, l'invention s'applique à la réalisation d'éléments miniaturisés tels que des "bio-chips" qui sont des puces comportant une partie de circuit électrique réalisée sur un substrat, tel qu'un champ d'électrodes, et une partie biologique réalisée à la surface de la puce. Dans cet exemple, il convient de déposer sélectivement sur les électrodes des composés chimiques compatibles avec les produits biologiques. On peut se reporter à ce sujet au document (3) dont la référence est indiquée à la fin de la présente description.

On entend par formation électrolytique d'un dépôt, aussi bien le dépôt classique d'un métal comme le cuivre ou le nickel par exemple, qu'un dépôt de composés complexes obtenus notamment à partir de substances organiques.

### Etat de la technique antérieure

Pour former sur des électrodes un dépôt, on fait appel actuellement à des procédés connus de microélectronique tels que les procédés de lithographie.

Ces procédés permettent de traiter sur une même tranche de semi-conducteur simultanément un grand nombre de puces, pour déposer sélectivement un composé chimique sur des électrodes déterminées de chaque puce.

Comme le montre le document (1) dont la référence est indiquée à la fin de la présente description, un tel procédé de réalisation de dépôts comporte les étapes successives suivantes :
- dépôt sur la tranche de semi-conducteur d'un fond continu conducteur électrique en contact avec les électrodes sur lesquelles on veut former un dépôt,
- formation sur le fond continu d'une couche de résine,
- ouvertures de fenêtres dans la résine au-dessus des électrodes choisies,
- formation électrochimique du matériau de dépôt dans les fenêtres en utilisant le fond continu comme électrode, une contre-électrode indépendante étant placée dans un bain électrochimique avec la tranche,
- élimination de la résine et du fond continu, autour du matériau déposé.

Ce procédé est classique. Il permet de déposer localement sur une tranche de substrat, par exemple sur des électrodes déterminées, un métal ou tout autre composé chimique.

Toutefois, dans certaines applications, il est nécessaire de recouvrir différentes électrodes d'une même puce avec des matériaux différents, ces matériaux étant dédiés à la fonction spécifique de chaque électrode.

Avec le procédé électrochimique mentionné, il est nécessaire pour déposer différents matériaux sur différents sites ou électrodes d'une tranche, de former autant de couches de résine que de matériaux différents à déposer. Il est en effet nécessaire, pour le dépôt de chaque matériau de mettre à nu les régions où le matériau doit être déposé et de protéger les régions où il ne doit pas l'être.

La succession d'un grand nombre d'étapes de dépôt de résine et d'opérations de lithographie pour pratiquer dans chaque couche de résine les ouvertures nécessaires, correspondant aux électrodes devant être revêtues d'un matériau donné, rend le procédé complexe.

Selon une autre technique permettant d'éviter les étapes de lithographie et de dépôt de résine, on utilise un support d'électrolyse avec des électrodes individuellement adressables.

Selon le nombre d'électrodes prévu sur le support d'électrolyse, un système d'adressage direct ou un système d'adressage multiplex peut être utilisé dans le support. On peut se reporter à ce sujet au document (2) cité à la fin de la présente description.

Dans le cas de l'adressage multiplex, des interrupteurs intégrés sont associés aux électrodes. Ainsi, pour effectuer un dépôt électrolytique sélectif, il suffit d'adresser sélectivement un ensemble donné d'électrodes en commandant la fermeture des interrupteurs appropriés, et leur appliquer ainsi le courant d'électrolyse.

Cette technique est moins complexe que la première technique mentionnée mais présente le désavantage d'un coût élevé.

En effet, il est nécessaire d'inclure dans chaque support d'électrolyse un système d'adressage souvent complexe et coûteux. De plus, ce système d'adressage est à usage unique pour chaque support et devient inutile lorsque les différents dépôts électrolytiques sont achevés.

On peut ajouter que selon les techniques mentionnées ci-dessus, il est nécessaire de plonger le support comportant les électrodes dans un bain électrolytique tout en appliquant un jeu de tensions de polarisation ou d'adressage adapté au système d'adressage des électrodes. Ceci peut poser des problèmes d'isolation ou de protection de prises de contact du support recevant les tensions de polarisation ou d'adressage.

### Exposé de l'invention

L'invention a pour but de remédier aux difficultés des techniques mentionnées ci-dessus.

Un but de l'invention est en particulier de proposer un procédé qui ne requiert pas la formation de masques de résine sur les électrodes non sélectionnées pour le dépôt.

Un but de l'invention est aussi de permettre l'usage d'un support d'électrolyse ne présentant pas nécessairement un système complexe et coûteux d'adressage.

Un but de l'invention est encore d'éviter un adressage des électrodes pendant que le support est plongé dans un bain électrolytique.

Un but de l'invention est aussi de proposer un support d'électrolyse et une tête de polarisation adapté à la mise en oeuvre du procédé.

Pour atteindre les buts mentionnés ci-dessus, l'invention a plus précisément pour objet un procédé de formation électrolytique d'un dépôt sur un ensemble d'électrodes sélectionnées d'un support, parmi une pluralité d'électrodes du support. Conformément à ce procédé,
- on utilise un support présentant à sa surface la pluralité d'électrodes et comprenant une armature électrique, dite plan de masse, formant respectivement avec la pluralité d'électrodes, une pluralité de condensateurs,
- on charge sélectivement un ensemble de condensateurs correspondant à l'ensemble d'électrodes sélectionnées en déposant sur ces électrodes des charges électriques,
- on met le support en présence d'un électrolyte pour provoquer un dépôt par électrolyse sur les électrodes correspondant aux condensateurs chargés, les charges électriques déposées sur les électrodes et accumulées respectivement dans les condensateurs correspondants fournissant pour chaque électrode sélectionnée un courant d'électrolyse.

Grâce au procédé de l'invention, le substrat peut être dépourvu d'un système d'adressage des électrodes. En effet, les charges peuvent être déposées directement sur les électrodes et emmagasinées dans les condensateurs formés par ces électrodes et le plan de masse. Pour déposer les charges électriques une tension électrique, dite tension de polarisation est, par exemple, appliquée entre le plan de masse et les électrodes sélectionnées.

De plus, les charges étant déposées préalablement à la mise en présence du support avec un électrolyte, l'adressage ou la polarisation des électrodes pendant l'électrolyse est évitée. Ceci permet ainsi d'écarter les problèmes de protection et d'isolation de prises de contact de polarisation et d'adressage par rapport à l'électrolyte.

La fourniture du courant d'électrolyse n'a en effet pas lieu par un générateur extérieur mais provient directement des charges emmagasinées dans les condensateurs correspondant aux électrodes sélectionnées.

Selon un aspect de l'invention, pendant l'étape d'électrolyse, le support peut être trempé dans un bain électrolytique ou un milieu contenant l'électrolyte, et le plan de masse peut être mis en contact avec une contre-électrode d'électrolyse plongée également dans le bain d'électrolyte.

Selon une variante, le plan de masse peut être directement utilisé comme contre électrode d'électrolyse. Dans ce cas, le support d'électrolyse peut être soit plongé dans un bain d'électrolyte soit simplement humecté avec de l'électrolyte. Par exemple, un mince film d'électrolyte en contact avec les électrodes et avec au moins une partie du plan de masse, peut être répandu à la surface du support.

Selon un autre aspect particulier de l'invention, pour charger sélectivement un ensemble de condensateurs, on utilise une tête de polarisation présentant une pluralité de plots de contact aptes à venir respectivement en contact avec la pluralité d'électrodes, la tête de polarisation étant disposée sur le support d'électrolyse de façon à mettre en contact électrique chaque électrode du support d'électrolyse avec un plot de contact correspondant de la tête de polarisation, et de façon à mettre en contact le plan de masse avec au moins un plot de contact de masse de la tête de polarisation, et une tension de polarisation étant sélectivement appliquée entre chaque électrode sélectionnée et le plan de masse, par l'intermédiaire des plots de contact.

La tête de polarisation peut comporter un système d'adressage, par exemple du type multiplex, pour appliquer sélectivement aux plots de contact des tensions de polarisation convenables pour charger les électrodes du support.

Lorsque les électrodes et donc les condensateurs d'un support ont été chargés à l'aide de la tête de polarisation, la tête est séparée du support et peut être réutilisée pour d'autres supports.

Ainsi, le système d'adressage de la tête de polarisation n'est pas à usage unique.

L'invention a également pour objet un support d'électrolyse pour la mise en oeuvre du procédé décrit ci-dessus. Le support d'électrolyse comprend une pluralité d'électrodes et une armature électrique, dite plan de masse, électriquement isolée de la pluralité d'électrodes, et formant avec ladite pluralité d'électrodes une pluralité de condensateurs. Les électrodes et/ou le plan de masse, sur lesquels sont déposées les charges peuvent se présenter sous la forme d'un matériau conducteur électrique déposé sur un support isolant.

A titre d'exemple, selon une réalisation particulière, le support d'électrolyse peut comporter une plaque de support, une couche de matériau conducteur électrique disposée sur la plaque de support et formant le plan de masse, une couche de matériau isolant électrique disposée sur la couche de matériau conducteur, et une pluralité d'électrodes en un matériau conducteur électrique disposées sur la couche de matériau isolant.

Les électrodes, séparées les unes des autres sont mutuellement isolées et sont isolées du plan de masse par la couche de matériau isolant.

Le plan de masse constitue une armature électrique commune par rapport à laquelle chaque électrode individuelle forme un condensateur et la couche de matériau isolant constitue le diélectrique des condensateurs.

Selon un aspect particulier, la couche de matériau isolant peut comporter au moins une ouverture traversante dans des régions dépourvues d'électrodes, pour mettre à nu le plan de masse dans ces régions. Cette caractéristique est en particulier intéressante lorsque le plan de masse est utilisé comme contre-électrode d'électrolyse. Ceci permet d'avoir, par exemple, une portion de contre-électrode au voisinage de chaque électrode et par conséquent assurer un dépôt fiable et homogène.

Les ouvertures peuvent être conçues comme des tranchées entourant individuellement chaque électrode.

Selon une variante, les électrodes et/ou le plan de masse peuvent également se présenter sous la forme de zones dopées formées par implantation dans un support semi-conducteur.

Le support d'électrolyse peut comporter, par exemple, un substrat semi-conducteur d'un premier type de conductivité et des zones implantées dans le substrat, d'un deuxième type de conductivité, opposé au premier type de conductivité.

L'isolation électrique entre électrodes est dans ce cas une isolation par jonction. A titre d'exemple, lorsque le substrat est du type de conductivité P, les électrodes sont des zones de type N. Le substrat est alors avantageusement relié à un potentiel fixe, choisi pour éviter la décharge des électrodes.

La présente invention a encore pour objet une tête de polarisation pouvant être utilisée pour la mise en oeuvre du procédé.

La tête de polarisation comporte :
- une plaque frontale équipée d'une pluralité de plots de contact disposés de manière à pouvoir être mis en contact respectivement avec la pluralité d'électrodes du support d'électrolyse et au moins un plot de contact de masse disposé de manière à pouvoir être mis en contact avec une prise de contact du plan de masse,
- des moyens d'adressage pour appliquer sélectivement à un ensemble de plots de contact parmi la pluralité de plots de contact une tension de polarisation.

Comme indiqué précédemment, les moyens d'adressage peuvent être du type multiplex. Les moyens d'adressage peuvent aussi comporter un réseau de lignes de connexion pour appliquer directement aux plots de contact des tensions convenables à partir d'une source de tension extérieure.

Selon un aspect particulier de l'invention, la tête de polarisation peut comporter une chambre de compression. La plaque frontale est alors conçue pour former une portion de paroi de la chambre de compression. La chambre de compression peut être mise sous pression pour déformer légèrement la plaque frontale lorsque la tête de polarisation est disposée sur le support, afin d'appliquer fermement les plots de contact sur les électrodes.

D'autres caractéristiques et avantages de l'invention ressortiront mieux de la description qui va suivre, en référence aux figures des dessins annexés, donnée à titre purement illustratif et non limitatif.

### Brève description des figures

- la figure 1 est une coupe schématique d'un support d'électrolyse pour la mise en oeuvre du procédé de l'invention,
- la figure 2 est une vue de dessus du support de la figure 1,
- la figure 3 est une coupe schématique d'une variante de réalisation du support d'électrolyse pour la mise en oeuvre du procédé de l'invention,
- la figure 4 est une coupe schématique d'une tête de polarisation conforme à l'invention, pour la mise en oeuvre du procédé de l'invention,
- La figure 5 est une coupe schématique du support de la figure 1 et de la tête de polarisation de la figure 4 et illustre une étape de charge sélective du support d'électrolyse conformément au procédé de l'invention.
- La figure 6 est une coupe schématique d'un bain d'électrolyse contenant un support d'électrolyse conforme à la figure 1,
- la figure 7 montre en coupe un support conforme à la figure 3 et illustre une étape d'électrolyse sur ce support conformément à l'invention.

### Description détaillée de modes de réalisation et de mise en oeuvre de l'invention

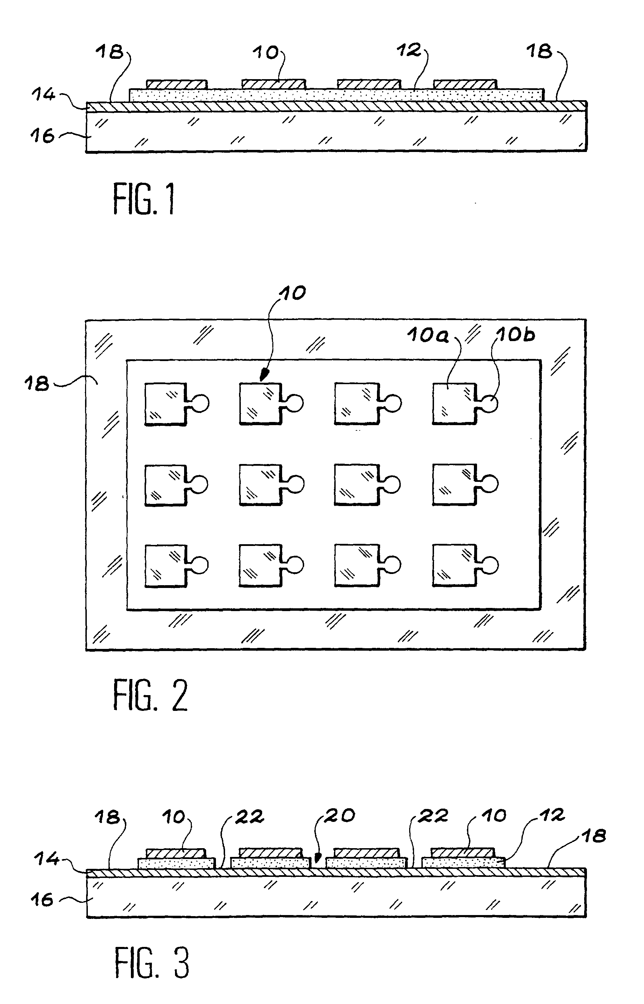

La figure 1 montre un support d'électrolyse du type utilisé pour la présente invention. Il comporte une pluralité d'électrodes 10 sur lesquelles peuvent être déposés sélectivement différents composés tels que des ligands. Ceux-ci peuvent être soit des sondes oligonucléotides pour la reconnaissance de cibles ADN, soit des sondes antigéniques pour la reconnaissance de cibles de type anticorps, soit des sondes chimiques pour la reconnaissance de certaines molécules telles des ions lourds, des gaz. Les sondes peuvent être soit greffées directement sur les électrodes soit greffées ou emprisonnées dans un réseau support (network en terminologie anglo-saxonne) tel qu'un polymère, par exemple de type polypyrrole, polyaniline, polythyophène, ces polymères présentant des propriétés de conduction facilitant le greffage par voie électrochimique. Ces dépôts permettent la fabrication des capteurs biologiques ou chimiques, par exemple.

Les électrodes 10 sont formées sur une couche 12 de matériau isolant qui les isole électriquement d'une couche de matériau conducteur 14. La couche 14 constitue un plan de masse dont la fonction est précisée ci-après, elle est désignée par plan de masse 14.

La couche 12 de matériau isolant est par exemple une couche d'oxyde de silicium SiO₂ d'une épaisseur de l'ordre de 50 à 100 nm.

Le plan de masse 14 et les électrodes 10 peuvent être réalisés, par exemple, en un métal choisi parmi le chrome, le nickel, l'or, l'aluminium ou le titane. D'autres conducteurs peuvent cependant être sélectionnés, notamment pour le plan de masse, en fonction des composés ou des substances que l'on veut déposer par électrolyse. L'épaisseur des électrodes et du plan de masse est choisie, par exemple, de 50 à 100 nm.

L'ensemble des électrodes 10, de la couche 12 et du plan de masse est supporté par une plaque de substrat 16.

La plaque de substrat 16, d'une épaisseur de l'ordre de 0,1 à plusieurs millimètres est en un matériau tel que du silicium, du verre ou du plastique, par exemple.

Comme le montre la figure 1, le plan de masse 14 n'est pas entièrement recouvert par la couche 12 de matériau isolant, mais une portion 18 du plan de masse, formant prise de contact est laissée à nu de façon à être accessible par la face du support comprenant les électrodes 10.

Chaque électrode 10 forme respectivement une première armature d'un condensateur et le plan de masse forme une deuxième armature, commune à tous les condensateurs. Le condensateur associé ainsi à chaque électrode peut être chargé en appliquant entre le plan de masse 14 et l'électrode 10 en question une tension de polarisation ou de charge adéquate. Les charges accumulées dans les condensateurs fournissent lors de l'électrolyse le courant d'électrolyse respectivement pour chaque électrode.

La figure 2, qui est une vue de dessus du support montre un agencement des électrodes en lignes et en colonnes.

Les électrodes dans cette disposition sont mutuellement isolées par la couche de matériau isolant 12.

Dans l'exemple de la figure 2, chaque électrode 10 présente une portion 10a appelée zone active, et un appendice 10b relié à la zone active. La zone active 10a est prévue pour recevoir un dépôt électrolytique et éventuellement accueillir un capteur biologique ou un autre élément sensible en fonction de la destination du support d'électrodes. La fonction de l'appendice 10b est par contre essentiellement de servir de prise de contact. L'appendice 10b est prévu pour recevoir un plot de contact d'une tête de polarisation décrite plus loin, en vue de charger le condensateur correspondant à l'électrode.

La figure 2 montre enfin que, dans le mode de réalisation illustré, la portion 18 du plan de masse 14 formant prise de contact fait le tour de la couche de matériau isolant 12 et la délimite à la façon d'une bordure.

La figure 3 montre une autre possibilité de réalisation du support d'électrolyse.

Dans le mode de réalisation de la figure 3, la couche 12 de matériau isolant est gravée de façon à y pratiquer des ouvertures 20 entre les électrodes 10. Les ouvertures 20, par exemple sous la forme de tranchées, permettent de mettre à nu des portions 22 du plan de masse 14, à proximité des électrodes 10. Par exemple, chaque électrode peut être entourée par une tranchée pratiquée dans la couche de matériau isolant.

L'utilité des ouvertures 20 et des portions 22 du plan de masse mises à nu se manifeste notamment lors de l'électrolyse, lorsque le plan de masse est utilisé directement comme contre-électrode d'électrolyse. Ce point est décrit avec plus de précision dans la suite du texte.

Les condensateurs associés aux électrodes sélectionnées du support peuvent être chargés éventuellement un à un en particulier lorsque le nombre des électrodes est réduit.

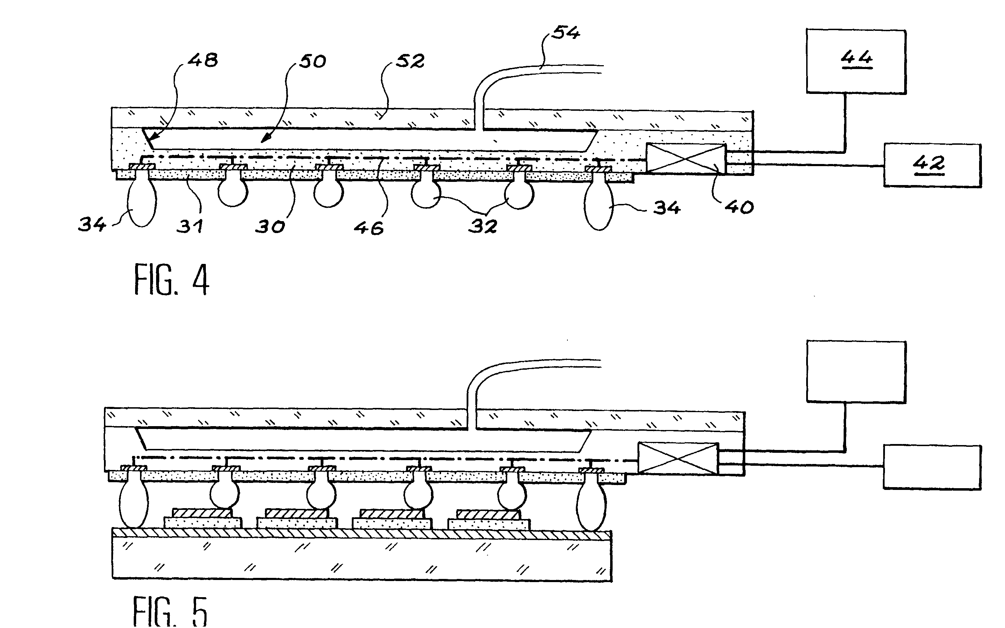

Toutefois, et notamment lorsque le nombre d'électrodes est grand, il est possible d'utiliser pour cette opération une tête de polarisation dont un exemple est donné à la figure 4.

La tête de polarisation comporte une plaque frontale 30 équipée d'une pluralité de plots de contact 32 sous la forme de billes et de plots de métal. Les billes de métal sont, par exemple, des billes en alliage Indium-Plomb. Elles sont mises en forme par un traitement thermique et à l'aide d'une couche 31 de matériau isolant, non mouillant pour les billes, qui recouvre la surface de la plaque frontale 30.

Le nombre de plots de contact et la répartition des plots de contact 32 à la surface de la plaque frontale 30 correspondent respectivement au nombre d'électrodes 10 et à la répartition des électrodes 10 à la surface d'un support d'électrolyse tel que représenté aux figures 1 à 3.

Ainsi, lorsque la tête de polarisation est disposée sur le support d'électrolyse, les billes formant les plots de contact viennent respectivement en contact avec les électrodes 10, et plus précisément avec les appendices 10b de ces électrodes.

La tête de polarisation comporte également un ou plusieurs plots supplémentaires 34, placés à la périphérie, prévus pour venir en contact avec la prise de contact 18 du plan de masse 14 du support d'électrolyse (voir figures 1 à 3). Les plots 34 sont formés par des billes avec, dans cet exemple, un diamètre légèrement supérieur à celui des billes formant les plots 32.

La plaque frontale 30, par exemple en silicium, peut comporter un circuit électronique d'adressage 40, relié à un générateur de tension extérieur 42. Le circuit 40, piloté par un ordinateur extérieur de commande 44, est conçu pour appliquer sélectivement à un ensemble sélectionné de plots de contact 32 une tension de polarisation fournie par le générateur 42.

Le circuit d'adressage 40 peut comporter des lignes et des colonnes d'adressage des plots. Chaque plot de contact est relié par l'intermédiaire d'un transistor à une ligne et à une colonne d'adressage. Ainsi, l'application de la tension de polarisation à un plot de contact donné résulte de la mise en conduction du transistor correspondant. Un tel adressage multiplex est connu en soi et utilisé, par exemple, pour la commande des écrans d'affichage à cristaux liquides.

Les lignes et les colonnes d'adressage sont symboliquement représentées par une ligne en trait mixte avec la référence 46.

La face arrière de la plaque frontale 30 peut être gravée de façon à présenter un évidement 48 dans la région comportant les plots de contact 32.

La plaque frontale 30 est par ailleurs collée à une plaque 52 de recouvrement de l'évidement 48. La plaque 52 est également en silicium.

L'évidement forme ainsi une chambre, désignée par chambre de compression 50, dont la plaque de recouvrement et la plaque frontale forment les parois.

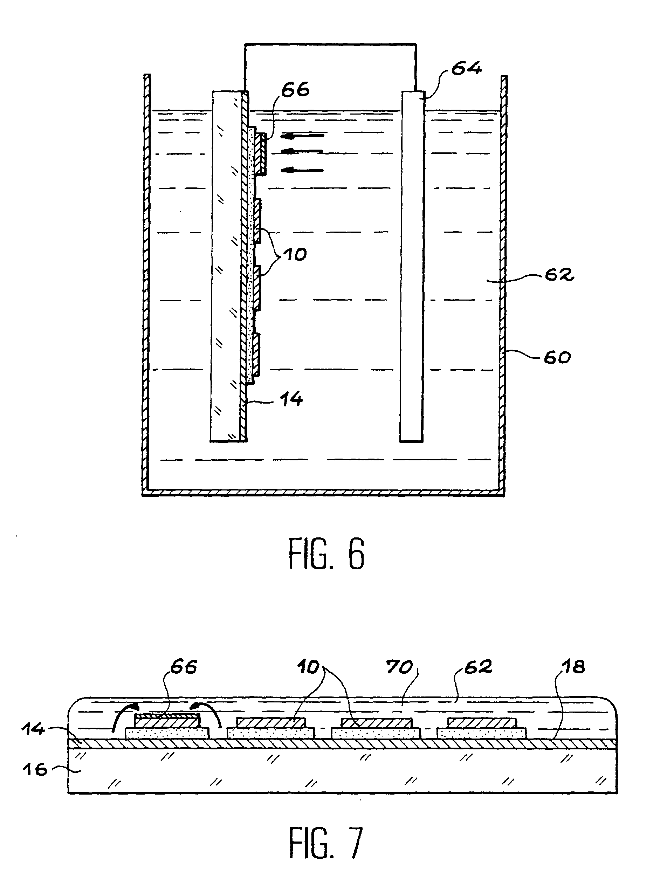

La chambre de compression 50 est reliée à une arrivée d'air sous pression 54. La paroi frontale 30 est par ailleurs conçue avec une élasticité suffisante pour se déformer légèrement en réponse à une mise sous pression de la chambre 50. L'utilité de cette déformation apparaît à la figure 5.

La figure 5 montre l'utilisation de la tête de polarisation de la figure 4 pour charger sélectivement les condensateurs correspondant à des électrodes d'un support d'électrolyse conforme à la figure 1.

Comme le montre la figure 5, la tête de polarisation est positionnée sur le support de telle façon que chaque plot de contact 32 vienne sur une électrode correspondante 10 du support d'électrolyse et que les plots supplémentaires 34 viennent sur la prise de contact 18 du plan de masse. On remarque à ce sujet que le diamètre légèrement supérieur des billes des plots de contact 34 permet de compenser l'épaisseur de la couche de matériau isolant 12 et l'épaisseur des électrodes 10.

Lorsque la tête de polarisation est ainsi positionnée puis maintenue mécaniquement (comme c'est le cas dans les machines d'alignement de microélectronique) sur le support d'électrolyse, de l'air sous pression est admis dans la chambre de compression 50. La pression établie dans la chambre 50 est supérieure à la pression environnante de 0,1 bar ou plus.

Sous l'effet de la pression, la plaque frontale se déforme légèrement vers le support comprenant les électrodes. Les plots de contact 32 sont ainsi fermement appliqués contre les électrodes 10. Cette mesure permet de garantir un bon contact entre ces parties.

Lorsque le contact entre les plots de contact et les électrodes est établi, le circuit d'adressage est commandé de façon à appliquer une tension de masse au plan de masse 14 du support d'électrolyse et à appliquer une tension V aux électrodes sélectionnées. La tension de masse est appliquée au plan de masse par l'intermédiaire des plots de contact 34 tandis que la tension V est appliquée aux électrodes sélectionnées par les plots de contact 32. De façon avantageuse, une tension de masse peut également être appliquée aux électrodes non sélectionnées.

Les condensateurs associés aux électrodes recevant la tension de polarisation V accumulent une charge Q telle que Q=CV, où C est la capacité du condensateur associé à chaque électrode. Les condensateurs associés aux électrodes recevant une tension de polarisation égale à la tension de masse (électrodes non sélectionnées) accumulent une charge nulle.

La polarisation des électrodes sélectionnées peut être concomitante ou séquentielle.

La figure 6 montre une étape suivante du procédé de l'invention qui est l'étape d'électrolyse. Le support d'électrolyse dont les condensateurs correspondant aux électrodes sélectionnées sont chargés, est plongé dans une cuve 60 contenant un bain d'électrolyte 62.

Une contre-électrode 64 est également plongée dans le bain est reliée électriquement au plan de masse 14 du support d'électrolyse.

L'électrolyse a alors lieu par un transfert des charges accumulées dans les condensateurs associés aux électrodes sélectionnées. Le transfert des charges a lieu entre les électrodes sélectionnées et la contre-électrode et provoque la formation d'un dépôt électrolytique 66 sur les électrodes sélectionnées. Le transfert de charges est symbolisé par des flèches sur la figure .

La figure 7 montre une variante de mise en oeuvre de l'étape d'électrolyse utilisant un support d'électrolyse conforme à la figure 3.

Dans le cas de la figure 7, seul un mince film d'électrolyte 70 est disposé sur la face du support comprenant les électrodes 10. Le film d'électrolyte mouille l'ensemble des électrodes 10 ainsi que le plan de masse sur la portion 18 formant prise de contact et dans les ouvertures 20.

Dans le cas de la figure 7, le plan de masse constitue la contre-électrode d'électrolyse.

Un transfert de charges, symbolisé par des flèches a lieu entre le plan de masse (dans les ouvertures 20) et les électrodes 10 sélectionnées.

Le transfert de charges crée un courant d'électrolyse qui permet la formation d'un dépôt 66 sur les électrodes sélectionnées. Lorsque les condensateurs correspondant aux électrodes sélectionnées sont déchargées sous l'effet du courant d'électrolyse, celle-ci s'arrête.

Le support d'électrolyse est ensuite rincé et séché. Il peut alors subir une nouvelle charge avec la tête de polarisation en sélectionnant d'autres électrodes pour un autre dépôt d'un matériau différent, par exemple.

Ainsi, le support d'électrolyse peut subir sélectivement plusieurs dépôts avec différents électrolytes.

### LISTE DES DOCUMENTS CITES DANS LA PRESENTE DEMANDE

***(1)***
   "Fluxless Flip-Chip Technology" de P. Caillat et G. Nicolas -LETI (CEA-Technologies avancées).
***(2)***
   "Array of individually addressable microelectrodes" de G. C Fiaccabrino et al., dans "Sensors and Actuators" B, 18-19 (1994), pp. 675-677.
***(3)***
   WO 94/22889

## Revendications

1. Procédé de formation électrolytique d'un dépôt sur un ensemble d'électrodes sélectionnées d'un support parmi une pluralité d'électrodes du support, caractérisé en ce que :
- on utilise un support présentant à sa surface la pluralité d'électrodes (10) et comprenant une armature électrique, dite plan de masse (14), formant respectivement avec la pluralité d'électrodes (10), une pluralité de condensateurs,
- on charge sélectivement un ensemble de condensateurs correspondant à l'ensemble d'électrodes sélectionnées en déposant sur ces électrodes des charges électriques,
- on met le support en présence d'un électrolyte (62) pour provoquer un dépôt par électrolyse sur les électrodes correspondant aux condensateurs chargés, les charges électriques déposées sur les électrodes et accumulées respectivement dans les condensateurs correspondants fournissant pour chaque électrode sélectionnée un courant d'électrolyse.

2. Procédé selon la revendication 1, dans lequel on utilise une contre-électrode d'électrolyse (64) en contact électrique avec le plan de masse (14).

3. Procédé selon la revendication 1, dans lequel on utilise le plan de masse (14) comme contre-électrode d'électrolyse.

4. Procédé selon la revendication 1, dans lequel pour charger sélectivement un ensemble de condensateurs, on utilise une tête de polarisation présentant une pluralité de plots de contact (32) aptes à venir respectivement en contact avec la pluralité d'électrodes (10), la tête de polarisation étant disposée sur le support d'électrolyse de façon à mettre en contact électrique chaque électrode (10) du support d'électrolyse avec un plot de contact correspondant de la tête de polarisation, et de façon à mettre en contact le plan de masse (14) avec au moins un plot de contact de masse (34) de la tête de polarisation, et les charges étant déposées sélectivement sur les électrodes sélectionnées par l'intermédiaire des plots de contact (32, 34).

5. Support d'électrolyse pour la mise en oeuvre du procédé selon l'une quelconque des revendications 1 à 4, comprenant une pluralité d'électrodes et une armature électrique, dite plan de masse, électriquement isolée de la pluralité d'électrodes, le plan de masse formant avec ladite pluralité d'électrodes une pluralité de condensateurs.

6. Support d'électrolyse selon la revendication 5, dans lequel les électrodes et/ou l'armature électrique, dite plan de masse, sont en un matériau conducteur électrique disposé sur un support isolant.

7. Support d'électrolyse selon la revendication 6, comprenant une plaque de support (16), une couche de matériau conducteur électrique disposée sur la plaque et formant le plan de masse (14), une couche (12) de matériau isolant électrique disposée sur la couche de matériau conducteur, et une pluralité d'électrodes (10) en un matériau conducteur électrique disposées sur la couche de matériau isolant (12).

8. Support d'électrolyse selon la revendication 7, dans lequel la couche de matériau isolant (12) comporte au moins une ouverture traversante (20) dans des régions dépourvues d'électrodes (10), pour mettre à nu le plan de masse (14) dans ces régions.

9. Support d'électrolyse selon la revendication 8, caractérisé en ce que les ouvertures traversantes (20) sont des tranchées entourant chaque électrode.

10. Support d'électrolyse selon la revendication 5, dans lequel les électrodes et/ou le plan de masse sont des zones dopées d'un support semi-conducteur.

11. Support d'électrolyse selon la revendication 10, comprenant un substrat semi-conducteur d'un premier type de conductivité et des zones implantées dans le substrat, d'un deuxième type de conductivité, opposé au premier type de conductivité.

12. Tête de polarisation pour la mise en oeuvre du procédé selon la revendication 4, caractérisée en ce qu'elle comporte :
- une plaque frontale (30) équipée d'une pluralité de plots de contact (32) disposés de manière à pouvoir être mis en contact respectivement avec la pluralité d'électrodes (10) du support d'électrolyse et au moins un plot de contact de masse (34) disposé de manière à pouvoir être mis en contact avec une prise de contact (18) du plan de masse (14),
- des moyens d'adressage (40, 46) pour appliquer sélectivement à un ensemble de plots de contact sélectionné parmi la pluralité de plots de contact (32) une tension de polarisation.

13. Tête de polarisation selon la revendication 12, dans laquelle les plots de contact (32) comportent des billes de contact.

14. Tête de polarisation selon la revendication 12, comportant une chambre de compression (50), la plaque frontale (30) formant une portion de paroi de la chambre de compression (50), et dans laquelle la chambre de compression peut être mise sous pression pour déformer légèrement la plaque frontale (30) lorsque la tête de polarisation est disposée sur le support d'électrolyse, afin d'appliquer fermement les plots de contact (32) sur les électrodes (10).

## Patentansprüche

1. Verfahren zur elektrolytischen Bildung einer Abscheidung auf einer Anordnung der unter einer Vielzahl von Elektroden eines Trägers selektierten Elektroden dieses Trägers,
**dadurch gekennzeichnet,** dass:
- man einen Träger verwendet, der an seiner Oberfläche die Vielzahl von Elektroden (10) aufweist und eine Massenebene (14) genannte elektrische Belegung (10) umfasst, die jeweils mit der Vielzahl Elektroden (10) eine Vielzahl Kondensatoren bildet,
- man selektiv eine der selektierten Elektrodenanordnung entsprechende Kondensatorenanordnung auflädt, indem man in diese Elektroden elektrische Ladungen einspeist,
- man den Träger in ein Elektrolyt-Bad (62) taucht, um durch Elektrolyse eine Abscheidung auf den den geladenen Kondensatoren entsprechenden Elektroden zu bewirken, wobei die in die Elektroden eingespeisten und jeweils in den entsprechenden Kondensatoren akkumulierten Ladungen für jede selektierte Elektrode einen Elektrolysestrom liefern.

2. Verfahren nach Anspruch 1, bei dem man eine Elektrolyse-Gegenelektrode (64) benutzt, die elektrischen Kontakt mit der Massenebene (14) hat.

3. Verfahren nach Anspruch 1, bei dem man die Massenebene (14) als Elektrolyse-Gegenelektrode benutzt.

4. Verfahren nach Anspruch 1, bei dem man zum Laden einer Kondensatorenanordnung einen Polarisations- bzw. Vorspannungskopf mit einer Vielzahl von Kontaktelementen (32) benutzt, mit denen man jeweils Kontakt mit der Vielzahl von Elektroden (10) herstellen kann, wobei der Vorspannungskopf auf dem Elektrolyseträger derart angeordnet wird, dass elektrischer Kontakt sowohl zwischen jeder Elektrode (10) des Elektrolyseträgers und einem entsprechenden Kontaktelement des Vorspannungskopfs als auch zwischen der Massenebene (14) und wenigstens einem Massenkontaktelement (34) des Vorspannungskopfs hergestellt wird und die Ladungen selektiv über die Kontaktelemente (32, 34) in die selektierten Elektroden eingespeist werden.

5. Elektrolyseträger für die Durchführung des Verfahrens nach einem der Ansprüche 1 bis 4 mit einer Vielzahl Elektroden und einer elektrischen Belegung, Massenebene genannt und elektrisch von der Vielzahl Elektroden isoliert, wobei die Massenebene mit dieser Vielzahl Elektroden eine Vielzahl Kondensatoren bildet.

6. Elektrolyseträger nach Anspruch 5, bei dem die Elektroden und/oder die elektrische Belegung, Massenebene genannt, aus einem elektrisch leitfähigen Material sind, abgeschieden auf einem isolierenden Träger.

7. Elektrolyseträger nach Anspruch 6 mit einer Trägerplatte (16), einer auf der Platte abgeschiedenen Schicht aus elektrisch leitfähigem Material, die die Massenebene (14) bildet, einer auf der Schicht aus leitfähigem Material abgeschiedenen Schicht (12) aus elektrisch isolierendem Material sowie einer Vielzahl Elektroden (10) aus einem elektrisch leitfähigen Material, abgeschieden auf der Schicht (12) aus isolierendem Material.

8. Elektrolyseträger nach Anspruch 7, bei dem die Schicht (12) aus isolierendem Material in den nicht mit Elektroden (10) versehenen Bereichen wenigstens eine Durchgangsöffnung (20) aufweist, um in diesen Bereichen die Massenebene (14) freizulegen.

9. Elektrolyseträger nach Anspruch 8, **dadurch gekennzeichnet,** dass die Durchgangsöffnungen (20) jede Elektrode umgebende Gräben sind.

10. Elektrolyseträger nach Anspruch 5, bei dem die Elektroden und/oder die Massenebene dotierte Zonen eines Halbleiterträgers sind.

11. Elektrolyseträger nach Anspruch 10 mit einem Halbleitersubstrat eines ersten Konduktivitätstyps und in das Substrat implantierten Zonen eines dem ersten Konduktivitätstyp entgegengesetzten zweiten Konduktivitätstyps.

12. Polarisations- bzw. Vorspannungskopf für die Durchführung des Verfahrens nach Anspruch 4, **dadurch gekennzeichnet,** dass er umfasst:
- eine Frontplatte (30) mit einer Vielzahl Kontaktelemente (32), so angeordnet, dass sie in Kontakt gebracht werden können mit der Vielzahl Elektroden (10) des Elektrolyseträgers, und mit wenigstens einem Massenkontaktelement (34), so angeordnet, dass es in Kontakt gebracht werden kann mit einer Kontaktstelle (18) der Massenebene (14),
- Adressiereinrichtungen (40, 46), um selektiv an eine Anordnung von Kontaktelementen, ausgewählt unter der Vielzahl Kontaktelemente (32), eine Polarisationsspannung anzulegen.

13. Polarisationskopf nach Anspruch 12, bei dem die Kontaktelemente (32) Kontaktkugeln umfassen.

14. Polarisationskopf nach Anspruch 12, der eine Druckkammer (50) umfasst, wobei die Frontplatte (30) einen Teil der Wand der Druckkammer (50) bildet und diese Druckkammer unter Druck gesetzt werden kann, wenn der Polarisationskopf auf dem Elektrolyseträger angebracht worden ist, sodass sich die Frontplatte (30) etwas verformt, damit die Kontaktelemente (32) fest auf die Elektroden (10) drücken.

## Claims

1. Process for the electrolytic formation of a deposit on a group of electrodes of a support chosen from among a multiplicity of electrodes on the support, characterized in that :
- the support used has on its surface the multiplicity of electrodes (10) and comprises an electric plate, so-called earth shield (14) respectively forming with the multiplicity of electrodes (10) a multiplicity of capacitors.
- a group of capacitors corresponding to the group of chosen electrodes is selectively charged by depositing electric charges on these electrodes
- the support is placed in the presence of an electrolyte (62) to cause electrolytic depositing on the electrodes corresponding to the charged capacitors, the electric charges deposited on the electrodes and stored in the corresponding capacitors respectively providing an electrolysis current for each chosen electrode.

2. Process in accordance with claim 1, in which an electrolysis counter-electrode is used (64) in electrical contact with earth shield (14).

3. Process in accordance with claim 1, in which an earth shield (14) is used as counter-electrode for electrolysis.

4. Process in accordance with claim 1, in which in order to selectively charge a group of capacitors, a polarizing head is used having a multiplicity of contact pads (32) able to come into contact respectively with the multiplicity of electrodes (10), the polarizing head being positioned on the electrolysis support in such manner as to bring each electrode (10) of the electrolysis support into contact with a corresponding contact pad of the polarizing head, and so that earth shield (14) comes into contact with at least one earth contact pad (34) of the polarizing head, the charges being deposited selectively on the chosen electrodes via contact pads (32, 34).

5. Electrolysis support to implement the process of any of claims 1 to 4, comprising a multiplicity of electrodes and an electric plate, so-called earth shield, electrically insulated from the multiplicity of electrodes, the earth shield forming with -said multiplicity of electrodes a multiplicity of capacitors.

6. Electrolysis support in accordance with claim 5, in which the electrodes and/or the electric plate, so-called earth shield, are in an electric conducting material placed on an insulating support.

7. Electrolysis support according to claim 6, comprising a support plate (16), a layer of electric conducting material placed on the plate forming the earth shield (14), a layer (12) of electric insulating material placed on the layer of conducting material, and a multiplicity of electrodes (10) in electric conductor material placed on the layer of insulating material (12).

8. Electrolysis support in accordance with claim 7, in which the layer of insulating material (12) comprises at least one through hole (20) in the areas without electrodes (10) to expose the earth shield (14) in these areas.

9. Electrolysis support in accordance with claim 8, characterized in that through holes (20) are grooves surrounding each electrode.

10. Electrolysis support in accordance with claim 5, in which the electrodes and/or the earth shield are doped zones of a semiconductor support.

11. Electrolysis support in accordance with claim 10, comprising a semiconductor substrate of a first type of conductivity and zones set in the substrate, having a second type of conductivity, opposed to the first type of conductivity.

12. Polarizing head to implement the process in accordance with claim 4, characterized in that it comprises:
- a front plate (30) fitted with a multiplicity of contact pads (32) placed in such manner that they may be placed in contact respectively with the multiplicity of electrodes (10) on the electrolysis support and with at least on earth contact pad (34) positioned so that it can be brought into contact with a contact connection (18) of earth shield (14).
- addressing means (40, 46) to selectively apply a polarizing voltage to a group of contact pads chosen from among the multiplicity of contact pads (32).

13. Polarizing head in accordance with claim 12, in which contact pads (32) comprise contact beads.

14. Polarizing head in accordance with claim 12, comprising a compression chamber (50), the front plate (30) forming one portion of wall of the compression chamber (50), and in which the compression chamber may be placed under pressure to produce slight deformation of front plate (30) when the polarizing head is placed on the electrolysis support, so that contact pads (32) may be firmly applied against electrodes (10).
